# EUROPEAN PATENT APPLICATION

(11) **EP 4 432 395 A1**
(43) Date of publication of application: **18.09.2024**
(21) Application number: 23161574.1
(22) Date of filing: 13.03.2023
(51) Int. Cl.: H01M 4/38, H01M 4/40, H01M 4/46, H01M 4/48, H01M 4/525, H01M 4/58, H01M 10/0525, H01M 10/056, H01M 50/403, H01M 50/426, H01M 50/446, H01M 50/451, H01M 10/052

(54) **LITHIUM-ION BATTERY**

(71) Applicant: Fraunhofer-Gesellschaft zur Förderung der angewandten Forschung e.V., 80686 München (DE); Daikin Chemical Europe GmbH, 40211 Düsseldorf (DE)
(72) Inventor: GIFFIN, Guinevere, Dr., 97082 Würzburg (DE); GÖTTLINGER, Mara, 97082 Würzburg (DE); BOHN, Hendrik, 97082 Würzburg (DE); WELLER, Mario, 97082 Würzburg (DE); BRÄNDEL, Timo, 59227 Ahlen (DE); FRIESEN, Alex, 59425 Unna (DE); NASSMACHER, Alexander, 48149 Münster (DE)
(74) Representative: Pfenning, Meinig & Partner mbB

(57) **Abstract**

The present invention is directed to a lithium-ion battery comprising a cathode, an anode, and also an anolyte and a catholyte, wherein the anolyte is a polymer electrolyte comprising at least one inorganic-organic hybrid polymer, and the catholyte is a polymer electrolyte comprising at least one fluoropolymer.

## Description

The present invention is directed to a lithium-ion battery comprising a cathode, an anode, and also an anolyte and a catholyte, wherein the anolyte is a polymer electrolyte comprising at least one inorganic-organic hybrid polymer, and the catholyte is a polymer electrolyte comprising at least one fluoropolymer.

Lithium-ion batteries are slowly reaching the limits of the technical possibilities to increase the energy density. Several different options are being explored to enable this limitation to be overcome. These include:
1. Substitution of the conventional graphite anode with silicon as an active material. This is being done in conventional lithium-ion chemistry in the form of graphite/silicon composite anodes, where Si makes up about 5-10% of the active material. However, this approach is currently limited by the rapid capacity loss associated with the volume change of Si during cycling.
2. High voltage cathode materials can be used. However, the conventional lithium-ion electrolytes are not stable at these voltages.
3. Lithium metal can be used as an anode, but the many challenges (dendrite growth, infinite volume change, etc.) associated with lithium metal anodes have not been solved.
4. Aspects of points 1, 2 and 3, associated with the challenges of the various active materials can be addressed through the use of solid-state electrolytes. However, there is no single solid-state electrolyte that functions well at both the anode and the cathode that exists today.

Several different solid-state battery chemistries are under investigation. These involve the use of other solid-state electrolytes, including oxides, sulfides or polymer electrolytes. However, there is no commercial solid-state battery containing Si as an anode material.

Known solid-state chemistries are:
1. Lithium metal polymer cells (LMP cell) are based on Lithium metal anodes, Lithium iron phosphate (LiFePO₄, LFP) cathodes and polyethylene oxide-based polymer electrolytes. Operating temperature is 50-80 °C. The energy density is limited by the comparatively low voltage and capacity of LFP (3.4 V average voltage, 170 mAg/g theoretical capacity).
2. Lithium metal-lithium nickel manganese cobalt oxide (NMC) cells containing sulfide-based electrolytes. Sulfide-based electrolytes have high conductivities, but are generally not stable against both the lithium metal anode and NMC cathodes, and release H₂S gas in contact with air, which poses a safety risk during production and during use. This problem of lithium compatibility may be solved using a polymer electrolyte protective layer (US 2021/296637 A).
3. Lithium metal-NMC cells containing oxide-based electrolytes. The oxide-based electrolytes are relatively stable, but can present problems in manufacturing particularly on the cathode side. This problem can be avoided through the use of a liquid cathode electrolyte.
4. Lithium metal-NMC cells containing polymer electrolytes can be found in the scientific literature with a wide variety of different polymers, but are normally focused on a single electrolyte. A wide variety of polymer electrolytes have been tested, proposed and patented in single electrolyte lithium metal polymer cells with various cathodes (e.g. US 2015/155559 A). For polymers that are not stable against Li metal, inorganic protection layers have been demonstrated (US 2004/126653 A).
5. Hybrid electrolytes containing inorganic oxides (as in 3) and polymer electrolytes (as in 4) have also been investigated (WO 2021/237335 A1).
6. Dual polymer cells may be found in the literature, but primarily with lithium metal as an anode. Other more exotic multi-electrolyte cells have also been described, but are based on more conventional polymers combined with inorganic materials (e.g. US 2017/346141 A).

Starting here from, it was the objective of the present invention to provide a lithium-ion battery with a high energy density.

This objective is solved by a lithium-ion battery having the features of patent claim 1. The dependent claims represent advantageous further developments.

According to the present invention, a lithium-ion battery is provided, the lithium-ion battery comprising a cathode, an anode, and also an anolyte and a catholyte, characterized in that the anolyte is a polymer electrolyte comprising at least one inorganic-organic hybrid polymer, and the catholyte is a polymer electrolyte comprising at least one fluoropolymer.

Due to the combination of the features that two electrolyte formulations (i.e. an anolyte and a catholyte) are used, that the anolyte is a polymer electrolyte comprising at least one inorganic-organic hybrid polymer, and that the catholyte is a polymer electrolyte comprising at least one fluoropolymer, it can be achieved that the lithium-ion battery according to the present invention has a high energy density. Possible challenges associated with volume changes of the active material of the anode are mitigated through the use of a polymer electrolyte containing an inorganic-organic hybrid polymer as anolyte due to the elastic properties of the inorganic-organic hybrid polymer. Since two electrolyte formulations (i.e. an anolyte and a catholyte) are used, the solid-state electrolyte system can be tailored to the various components of the cell. In other words, the anolyte and the catholyte can be tailored to one of the compartments, i.e. the anode compartment and the cathode compartment, respectively.

According to a preferred embodiment of the present invention, the at least one inorganic-organic hybrid polymer is producible from at least one crosslinkable precursor comprising or consisting of one or more structural units according to the following formula (I), 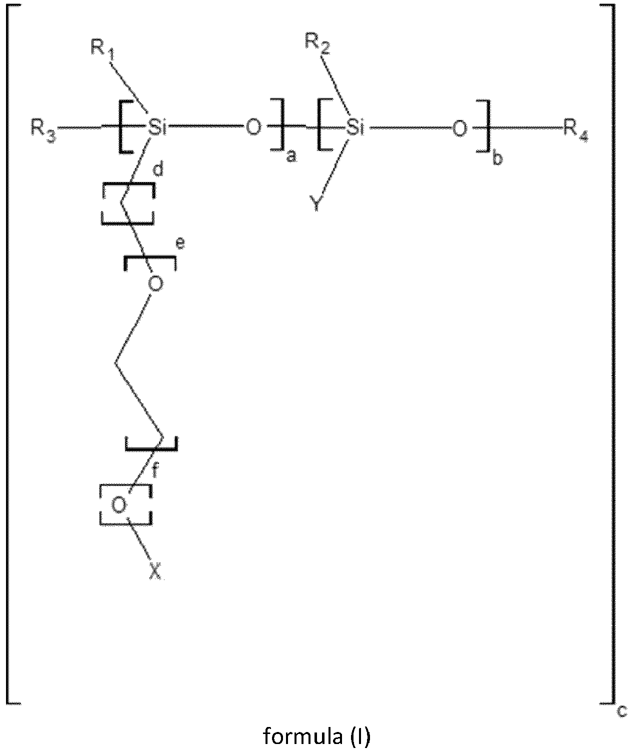 wherein
- X: is selected from the group consisting of vinyl, acryl, methacryl, epoxy, glycidyl, and spiro orthoester,
- R₁, R₂, R₃: are each independently selected from the group consisting of -H, -OH, alkyl, -O-alkyl, and -O-, wherein -O- is a bridging grouping to a Si atom of the same structural unit or another structural unit according to formula (I) of the at least one cross-linkable precursor,
- R₄: is selected from the group consisting of -H, alkyl, and Si of another structural unit according to formula (I) of the at least one crosslinkable precursor,
- Y: is selected from the group consisting of -Z, -alkyl-Z, -aryl-Z, and -(CH₂)ₕ-O-(CH₂CH₂O)ᵢ-Z, wherein h = 2 or 3, and i = (a number or an integer from) 1 to 20,
- Z: is an uncharged group or an anionic group; wherein the uncharged group is preferably selected from the group consisting of -H; linear or branched alkyl; linear or branched aryl; cyclic or acyclic acyl, optionally with hetero atoms, in particular a cyclic carbonate; and mixtures thereof; and wherein the anionic group is preferably selected from the group consisting of borate, triflate, sulfonate, derivatives of sulfonimides, and mixtures thereof,
- a: is a number (or an integer) from 1 to 30,
- b: is a number (or an integer) from 1 to 30,
- c: is a number (or an integer) from 1 to 30,
- d: is a number (or an integer) from 2 to 6,
- e: is a number (or an integer) from 0 to 20,
- f: is 0 or 1.

According to a further preferred embodiment of the present invention, the at least one fluoropolymer is selected from the group consisting of polyvinyl fluoride (PVF), polyvinylidene fluoride (PVDF), polytetrafluoroethylene (PTFE), polyhexafluoropropane (PHFP), polyethylene tetrafluoroethylene (ETFE), polychlorotrifluoroethylene (CTFE), polyethylenechlorotrifluoroethylene (ECTFE), and also blends and copolymers thereof. It is particularly preferred that the at least one fluoropolymer is polyvinylidene fluoride (PVDF).

According to a further preferred embodiment of the present invention, the catholyte and/or the anolyte (each) comprise(s) at least one lithium salt (as conducting salt) and/or at least one ionic liquid.

Preferably, the catholyte and the anolyte comprise the same (at least one) lithium salt and the same (at least one) ionic liquid. Thus, interface resistances between the two compartments (i.e. the anode compartment and the cathode compartment) can be minimized.

Preferably, the at least one lithium salt (of the catholyte and/or of the anolyte) is selected from the group consisting of LiPF₆, LiBF₄. LiClO₄, LiAsF₆, (LiB(C₂O₄)₂, LiBF₂(C₂O₄), LiSO₃CₓF₂ₓ₊₁, LiN(SO₂CₓF₂ₓ₊₁)₂, and LiC(SO₂CₓF₂ₓ₊₁)₃, and mixtures thereof, wherein x is an integer from 0 to 8 (independent for each compound).

Preferably, the at least one ionic liquid (of the catholyte and/or of the anolyte) is selected from the group consisting of pyrrolidinium-N(SO₂CₓF₂ₓ₊₁)₂, N-alkyl-N-alkyl-pyrrolidinium-N(SO₂CₓF₂ₓ₊₁)₂, N-alkyl-N-alkoxyalkyl-pyrrolidinium-N(SO₂CₓF₂ₓ₊₁)₂, pyridinium-N(SO₂CₓF₂ₓ₊₁)₂, imidazolium-N(SO₂CₓF₂ₓ₊₁)₂, 1-alkyl-3-alkyl-imidazolium-N(SO₂CₓF₂ₓ₊₁)₂, 1-alkoxyalkyl-3-alkyl-imidazolium-N(SO₂CₓF₂ₓ₊₁)₂, piperidinium-N(SO₂CₓF₂ₓ₊₁)₂, N-alkyl-N-alkyl-piperidinium-N(SO₂CₓF₂ₓ₊₁)₂, N-alkyl-N-alkoxyalkyl-piperidinium-N(SO₂CₓF₂ₓ₊₁)₂, pyrrolidinium trifluoromethanesulfonate, N-alkyl-N-alkyl-pyrrolidinium trifluoro-methanesulfonate, N-alkyl-N-alkoxyalkyl-pyrrolidinium trifluoromethanesulfonate, imidazolium trifluoro-methanesulfonate, 1-alkyl-3-alkyl-imidazolium trifluoro-methanesulfonate, 1-alkoxyalkyl-3-alkyl-imidazolium trifluoro-methanesulfonate, imidazolium tetrafluoroborate, 1-alkyl-3-alkyl-imidazolium tetrafluoroborate, 1-alkoxyalkyl-3-alkyl-imidazolium tetrafluoroborate, piperidinium tetrafluoroborate, N-alkyl-N-alkyl-piperidinium tetrafluoroborate, N-alkyl-N-alkoxyalkyl-piperidinium tetrafluoroborate, pyrrolidinium tetrafluoroborate, N-alkyl-N-alkyl-pyrrolidinium tetrafluoroborate, N-alkyl-N-alkoxyalkyl-pyrrolidinium tetrafluoroborate, pyridinium tetrafluoroborate, and mixtures thereof, wherein x is an integer from 0 to 8 (independent for each compound), wherein preferably alkyl is in each case independently selected from the group consisting of methyl, ethyl, propyl, butyl, pentyl, and hexyl, and wherein preferably alkoxylalkyl is in each case independently selected from the group consisting of methoxymethyl, methoxyethyl, methoxypropyl, methoxybutyl, methoxypentyl, ethoxymethyl, ethoxyethyl, ethoxypropyl, ethoxybutyl, propoxymethyl, propoxyethyl, propoxypropyl, butoxymethyl, butoxyethyl, and pentoxymethyl.

In a particular preferred embodiment of the present invention, the at least one ionic liquid (of the catholyte and/or of the anolyte) is selected from the group consisting of pyrrolidinium-N(SO₂CₓF₂ₓ₊₁)₂, N-methyl-N-propyl-pyrrolidinium-N(SO₂CₓF₂ₓ₊₁)₂, N-methyl-N-butyl-pyrrolidinium-N(SO₂CₓF₂ₓ₊₁)₂, N-methyl-N-pentyl-pyrrolidinium-N(SO₂CₓF₂ₓ₊₁)₂, N-methyl-N-methoxyethyl-pyrrolidinium-N(SO₂CₓF₂ₓ₊₁)₂, N-methyl-N-methoxypropyl-pyrrolidinium-N(SO₂CₓF₂ₓ₊₁)₂, N-methyl-N-methoxybutyl-pyrrolidinium-N(SO₂CₓF₂ₓ₊₁)₂, pyridinium-N(SO₂CₓF₂ₓ₊₁)₂, N-methyl-N-propyl-pyridinium-N(SO₂CₓF₂ₓ₊₁)₂, N-methyl-N-butyl-pyridinium-N(SO₂CₓF₂ₓ₊₁)₂, N-methyl-N-pentyl-pyridinium-N(SO₂CₓF₂ₓ₊₁)₂, N-methyl-N-methoxyethyl-pyridinium-N(SO₂CₓF₂ₓ₊₁)₂, N-methyl-N-methoxypropyl-pyridinium-N(SO₂CₓF₂ₓ₊₁)₂, N-methyl-N-methoxybutyl-pyridinium-N(SO₂CₓF₂ₓ₊₁)₂, imidazolium-N(SO₂CₓF₂ₓ₊₁)₂, 1-methyl-3-propyl-imidazolium-N(SO₂CₓF₂ₓ₊₁)₂, 1- butyl-3-methyl-imidazolium-N(SO₂CₓF₂ₓ₊₁)₂, 1-methyl-3-pentyl-imidazolium-N(SO₂CₓF₂ₓ₊₁)₂, 1-methoxyethyl-3-methyl-imidazolium-N(SO₂CₓF₂ₓ₊₁)₂, 1-methoxypropyl-3-methyl-imidazolium-N(SO₂CₓF₂ₓ₊₁)₂, 1-methoxybutyl-3-methyl-imidazolium-N(SO₂CₓF₂ₓ₊₁)₂, piperidinium-N(SO₂CₓF₂ₓ₊₁)₂, N-methyl-N-propyl-piperidinium-N(SO₂CₓF₂ₓ₊₁)₂, N-methyl-N-butyl-piperidinium-N(SO₂CₓF₂ₓ₊₁)₂, N-methyl-N-pentyl-piperidinium-N(SO₂CₓF₂ₓ₊₁)₂, N-methyl-N-methoxyethyl-piperidinium-N(SO₂CₓF₂ₓ₊₁)₂, N-methyl-N-methoxypropyl-piperidinium-N(SO₂CₓF₂ₓ₊₁)₂, N-methyl-N-methoxybutylpiperidinium-N(SO₂CₓF₂ₓ₊₁)₂, pyrrolidinium trifluoromethanesulfonate, N-methyl-N-propyl-pyrrolidinium trifluoromethanesulfonate, N-methyl-N-butyl-pyrrolidinium trifluoromethanesulfonate, N-methyl-N-pentyl-pyrrolidinium trifluoromethanesulfonate, N-methyl-N-methoxyethyl-pyrrolidinium trifluoromethanesulfonate, N-methyl-N-methoxypropyl-pyrrolidinium trifluoromethanesulfonate, N-methyl-N-methoxybutyl-pyrrolidinium trifluoromethanesulfonate, imidazolium trifluoro-methanesulfonate, 1-methyl-3-propyl-imidazolium trifluoro-methanesulfonate, 1-butyl-3-methyl-imidazolium trifluoromethanesulfonate, 1-methyl-3-pentyl-imidazolium trifluoromethanesulfonate, 1-methoxyethyl-3-methyl-imidazolium trifluoromethanesulfonate, 1-methoxypropyl-3-methyl-imidazolium trifluoromethanesulfonate, 1-methoxybutyl-3-methyl-imidazolium trifluoromethanesulfonate, imidazolium tetrafluoroborate, 1-methyl-3-propyl-imidazolium tetrafluoroborate, 1-butyl-3-methyl-imidazolium tetrafluoroborate, 1-methyl-3-pentyl-imidazolium tetrafluoroborate, 1-methoxyethyl-3-methyl-imidazolium tetrafluoroborate, 1-methyl-3-methoxypropyl-imidazolium tetrafluoroborate, 1-methoxybutyl-3-methyl-imidazolium tetrafluoroborate, piperidinium tetrafluoroborate, N-methyl-N-propyl-piperidinium tetrafluoroborate, N-methyl-N-butyl-piperidinium tetrafluoroborate, N-methyl-N-pentyl-piperidinium tetrafluoroborate, N-methyl-N-methoxyethyl-piperidinium tetrafluoroborate, N-methyl-N-methoxypropyl-piperidinium tetrafluoroborate, N-methyl-N-methoxybutyl-piperidinium tetrafluoroborate, pyrrolidinium tetrafluoroborate, N-methyl-N-propyl-pyrrolidinium tetrafluoroborate, N-methyl-N-butyl-pyrrolidinium tetrafluoroborate, N-methyl-N-pentyl-pyrrolidinium tetrafluoroborate, N-methyl-N-methoxyethyl-pyrrolidinium tetrafluoroborate, N-methyl-N-methoxypropyl-pyrrolidinium tetrafluoroborate, N-methyl-N-methoxybutyl-pyrrolidinium tetrafluoroborate, pyridinium tetrafluoroborate, and mixtures thereof, wherein x is an integer from 0 to 8 (independent for each compound).

According to a further preferred embodiment of the present invention, the anolyte has the following composition:
- 20 to 95 wt.-%, preferably 40 to 80 wt.-%, of the at least one inorganic-organic hybrid polymer, wherein the at least one inorganic-organic hybrid polymer is preferably producible from at least one crosslinkable precursor comprising or consisting of one or more structural units according to formula (I),
- 4 to 79 wt.-%, preferably 8 to 40 wt.-%, of at least one lithium salt, wherein the at least one lithium salt is preferably selected from the group consisting of LiPF₆, LiBF₄. LiClO₄, LiAsF₆, LiB(C₂O₄)₂, LiBF₂(C₂O₄), LiSO₃CₓF₂ₓ₊₁, LiN(SO₂CₓF₂ₓ₊₁)₂, and LiC(SO₂CₓF₂ₓ₊₁)₃, and mixtures thereof, wherein x is an integer from 0 to 8 (independent for each compound),
- 1 to 50 wt.-%, preferably 10 to 30 wt.-%, of at least one ionic liquid, wherein the at least one ionic liquid is preferably selected from the group consisting of pyrrolidinium-N(SO₂CₓF₂ₓ₊₁)₂, N-alkyl-N-alkyl-pyrrolidinium-N(SO₂CₓF₂ₓ₊₁)₂, N-alkyl-N-alkoxyalkyl-pyrrolidinium-N(SO₂CₓF₂ₓ₊₁)₂, pyridinium-N(SO₂CₓF₂ₓ₊₁)₂, imidazolium-N(SO₂CₓF₂ₓ₊₁)₂, 1-alkyl-3-alkyl-imidazolium-N(SO₂CₓF₂ₓ₊₁)₂, 1-alkoxyalkyl-3-alkyl-imidazolium-N(SO₂CₓF₂ₓ₊₁)₂, piperidinium-N(SO₂CₓF₂ₓ₊₁)₂, N-alkyl-N-alkyl-piperidinium-N(SO₂CₓF₂ₓ₊₁)₂, N-alkyl-N-alkoxyalkyl-piperidinium-N(SO₂CₓF₂ₓ₊₁)₂, pyrrolidinium trifluoromethanesulfonate, N-alkyl-N-alkyl-pyrrolidinium trifluoromethanesulfonate, N-alkyl-N-alkoxyalkyl-pyrrolidinium trifluoromethanesulfonate, imidazolium trifluoromethanesulfonate, 1-alkyl-3-alkyl-imidazolium trifluoro-methanesulfonate, 1-alkoxyalkyl-3-alkyl-imidazolium trifluoro-methanesulfonate, imidazolium tetrafluoroborate, 1-alkyl-3-alkyl-imidazolium tetrafluoroborate, 1-alkoxyalkyl-3-alkyl-imidazolium tetrafluoroborate, piperidinium tetrafluoroborate, N-alkyl-N-alkyl-piperidinium tetrafluoroborate, N-alkyl-N-alkoxyalkyl-piperidinium tetrafluoroborate, pyrrolidinium tetrafluoroborate, N-alkyl-N-alkyl-pyrrolidinium tetrafluoroborate, N-alkyl-N-alkoxyalkyl-pyrrolidinium tetrafluoroborate, pyridinium tetrafluoroborate, and mixtures thereof, wherein x is an integer from 0 to 8 (independent for each compound), wherein preferably alkyl is in each case independently selected from the group consisting of methyl, ethyl, propyl, butyl, pentyl, and hexyl, and wherein preferably alkoxylalkyl is in each case independently selected from the group consisting of methoxymethyl, methoxyethyl, methoxypropyl, methoxybutyl, methoxypentyl, ethoxymethyl, ethoxyethyl, ethoxypropyl, ethoxybutyl, propoxymethyl, propoxyethyl, propoxypropyl, butoxymethyl, butoxyethyl, and pentoxymethyl,

- optionally 0.1 to 30 wt.-%, preferably 1 to 10 wt.-%, of at least one crosslinking molecule having at least one crosslinkable group selected from group consisting of vinyl, acryl, methacryl, epoxy, glycidyl, and spiro orthoester,
- optionally 0.01 to 5.00 wt.-%, preferably 0.05 to 0.50 wt.-%, of at least one initiator, wherein the at least one initiator is preferably selected from the group consisting of LiBF₄. dibenzoylperoxide (DBPO), borontrifluoride ethylamine complex, 2,2'-azobis(isobutyronitrile) (AIBN), Ignacure initiators, and mixtures thereof,
the proportions of the components (of the anolyte) adding up to 100 wt.-%.

LiBF₄ can be used (in some cases) as both conductive salt (i.e. lithium salt) and initiator (e.g. with epoxy or glycidyl groups, i.e. X as defined above). Thus, if the at least one lithium salt comprises LiBF₄. it is possible that an additional initiator is only optional since LiBF₄ can act as initiator.

According to a further preferred embodiment of the present invention, the catholyte has the following composition:
- 30 to 80 wt.-%, preferably 40 to 70 wt.-%, of the at least one fluoropolymer, wherein the at least one fluoropolymer is preferably selected from the group consisting of polyvinyl fluoride (PVF), polyvinylidene fluoride (PVDF), polytetrafluoroethylene (PTFE), polyhexafluoropropane (PHFP), polyethylene tetrafluoroethylene (ETFE), polychlorotrifluoroethylene (CTFE), polyethylenechlorotrifluoroethylene (ECTFE), and also blends and copolymers thereof,
- 10 to 33 wt.-%, preferably 15 to 30 wt.-%, of at least one lithium salt, wherein the at least one lithium salt is preferably selected from the group consisting of LiPF₆, LiBF₄. LiClO₄, LiAsF₆, LiB(C₂O₄)₂, LiBF₂(C₂O₄), LiS0₃CₓF₂ₓ₊₁, LiN(SO₂CₓF₂ₓ₊₁)₂, and LiC(SO₂CₓF₂ₓ₊₁)₃, and mixtures thereof, wherein x is an integer from 0 to 8 (independent for each compound),
- 10 to 60 wt.-%, preferably 20 to 40 wt.-%, of at least one ionic liquid, wherein the at least one ionic liquid is preferably selected from the group consisting of pyrrolidinium-N(SO₂CₓF₂ₓ₊₁)₂, N-alkyl-N-alkyl-pyrrolidinium-N(SO₂CₓF₂ₓ₊₁)₂, N-alkyl-N-alkoxyalkyl-pyrrolidinium-N(SO₂CₓF₂ₓ₊₁)₂, pyridinium-N(SO₂CₓF₂ₓ₊₁)₂, imidazolium-N(SO₂CₓF₂ₓ₊₁)₂, 1-alkyl-3-alkyl-imidazolium-N(SO₂CₓF₂ₓ₊₁)₂, 1-alkoxyalkyl-3-alkyl-imidazolium-N(SO₂CₓF₂ₓ₊₁)₂, piperidinium-N(SO₂CₓF₂ₓ₊₁)₂, N-alkyl-N-alkyl-piperidinium-N(SO₂CₓF₂ₓ₊₁)₂, N-alkyl-N-alkoxyalkyl-piperidinium-N(SO₂CₓF₂ₓ₊₁)₂, pyrrolidinium trifluoromethanesulfonate, N-alkyl-N-alkyl-pyrrolidinium trifluoromethanesulfonate, N-alkyl-N-alkoxyalkyl-pyrrolidinium trifluoromethanesulfonate, imidazolium trifluoromethanesulfonate, 1-alkyl-3-alkyl-imidazolium trifluoro-methanesulfonate, 1-alkoxyalkyl-3-alkyl-imidazolium trifluoromethanesulfonate, imidazolium tetrafluoroborate, 1-alkyl-3-alkyl-imidazolium tetrafluoroborate, 1-alkoxyalkyl-3-alkyl-imidazolium tetrafluoroborate, piperidinium tetrafluoroborate, N-alkyl-N-alkyl-piperidinium tetrafluoroborate, N-alkyl-N-alkoxyalkyl-piperidinium tetrafluoroborate, pyrrolidinium tetrafluoroborate, N-alkyl-N-alkyl-pyrrolidinium tetrafluoroborate, N-alkyl-N-alkoxyalkyl-pyrrolidinium tetrafluoroborate, pyridinium tetrafluoroborate, and mixtures thereof, wherein x is an integer from 0 to 8 (independent for each compound), wherein preferably alkyl is in each case independently selected from the group consisting of methyl, ethyl, propyl, butyl, pentyl, and hexyl, and wherein preferably alkoxylalkyl is in each case independently selected from the group consisting of methoxymethyl, methoxyethyl, methoxypropyl, methoxybutyl, methoxypentyl, ethoxymethyl, ethoxyethyl, ethoxypropyl, ethoxybutyl, propoxymethyl, propoxyethyl, propoxypropyl, butoxymethyl, butoxyethyl, and pentoxymethyl,
the proportions of the components (of the catholyte) adding up to 100 wt.-%.

According to a further preferred embodiment of the present invention, the cathode has a first coating comprising the catholyte and has a second coating comprising the anolyte. Thus, interface resistances between the two compartments (i.e. the anode compartment and the cathode compartment) can be minimized. Preferably, the anolyte is directly cured/coated on the surface of the catholyte overcoated cathode.

According to a further preferred embodiment of the present invention, the anode has a coating comprising the anolyte.

According to a further preferred embodiment of the present invention, the anode comprises or consists of a material selected from the group consisting of lithium (Li), silicon (Si), germanium (Ge), tin (Sn), aluminium (Al), antimony (Sb), lithium metal oxides, and also mixtures, alloys, and combinations thereof, wherein preferably the anode comprises silicon (Si), wherein more preferably the anode comprises from 50 to 95 wt.-%, preferably from 70 to 85 wt.-%, of silicon (Si).

According to a further preferred embodiment of the present invention, the cathode comprises or consists of a material selected from the group consisting of lithium metal oxides, lithium metal phosphates, and also mixtures and combinations thereof, wherein preferably the cathode comprises from 50 to 95 wt.-%, preferably from 70 to 85 wt.-%, of a material selected from the group consisting of lithium metal oxides, lithium metal phosphates, and also mixtures and combinations thereof.

The fluoropolymer-based catholyte is particularly stable at cathode voltages associated with Ni-rich cathode materials. Thus, it is preferred that the cathode comprises Ni. Preferably, the cathode comprises Li and Ni. For example, the cathode comprises LiNi_{0.6}Mn_{0.2}Co_{0.2}O₂ (NMC622).

According to a further preferred embodiment of the present invention, the lithium-ion battery comprises a separator, wherein the separator has preferably the following composition:
- 30 to 80 wt.-%, preferably 40 to 70 wt.-%, of the at least one fluoropolymer, wherein the at least one fluoropolymer is preferably selected from the group consisting of polyvinyl fluoride (PVF), polyvinylidene fluoride (PVDF), polytetrafluoroethylene (PTFE), polyhexafluoropropane (PHFP), polyethylene tetrafluoroethylene (ETFE), polychlorotrifluoroethylene (CTFE), polyethylenechlorotrifluoroethylene (ECTFE), and also blends and copolymers thereof,
- 10 to 33 wt.-%, preferably 15 to 30 wt.-%, of at least one lithium salt, wherein the at least one lithium salt is preferably selected from the group consisting of LiPF₆, LiBF₄. LiClO₄, LiAsF₆, LiB(C₂O₄)₂, LiBF₂(C₂O₄), LiS0₃CₓF₂ₓ₊₁, LiN(SO₂CₓF₂ₓ₊₁)₂, and LiC(SO₂CₓF₂ₓ₊₁)₃, and mixtures thereof, wherein x is an integer from 0 to 8 (independent for each compound),
- 10 to 60 wt.-%, preferably 20 to 40 wt.-%, of at least one ionic liquid, wherein the at least one ionic liquid is preferably selected from the group consisting of pyrrolidinium-N(SO₂CₓF₂ₓ₊₁)₂, N-alkyl-N-alkyl-pyrrolidinium-N(SO₂CₓF₂ₓ₊₁)₂, N-alkyl-N-alkoxyalkyl-pyrrolidinium-N(SO₂CₓF₂ₓ₊₁)₂, pyridinium-N(SO₂CₓF₂ₓ₊₁)₂, imidazolium-N(SO₂CₓF₂ₓ₊₁)₂, 1-alkyl-3-alkyl-imidazolium-N(SO₂CₓF₂ₓ₊₁)₂, 1-alkoxyalkyl-3-alkyl-imidazolium-N(SO₂CₓF₂ₓ₊₁)₂, piperidinium-N(SO₂CₓF₂ₓ₊₁)₂, N-alkyl-N-alkyl-piperidinium-N(SO₂CₓF₂ₓ₊₁)₂, N-alkyl-N-alkoxyalkyl-piperidinium-N(SO₂CₓF₂ₓ₊₁)₂, pyrrolidinium trifluoromethanesulfonate, N-alkyl-N-alkyl-pyrrolidinium trifluoromethanesulfonate, N-alkyl-N-alkoxyalkyl-pyrrolidinium trifluoromethanesulfonate, imidazolium trifluoromethanesulfonate, 1-alkyl-3-alkyl-imidazolium trifluoromethanesulfonate, 1-alkoxyalkyl-3-alkyl-imidazolium trifluoromethanesulfonate, imidazolium tetrafluoroborate, 1-alkyl-3-alkyl-imidazolium tetrafluoroborate, 1-alkoxyalkyl-3-alkyl-imidazolium tetrafluoroborate, piperidinium tetrafluoroborate, N-alkyl-N-alkyl-piperidinium tetrafluoroborate, N-alkyl-N-alkoxyalkyl-piperidinium tetrafluoroborate, pyrrolidinium tetrafluoroborate, N-alkyl-N-alkyl-pyrrolidinium tetrafluoroborate, N-alkyl-N-alkoxyalkyl-pyrrolidinium tetrafluoroborate, pyridinium tetrafluoroborate, and mixtures thereof, wherein x is an integer from 0 to 8 (independent for each compound), wherein preferably alkyl is in each case independently selected from the group consisting of methyl, ethyl, propyl, butyl, pentyl, and hexyl, and wherein preferably alkoxylalkyl is in each case independently selected from the group consisting of methoxymethyl, methoxyethyl, methoxypropyl, methoxybutyl, methoxypentyl, ethoxymethyl, ethoxyethyl, ethoxypropyl, ethoxybutyl, propoxymethyl, propoxyethyl, propoxypropyl, butoxymethyl, butoxyethyl, and pentoxymethyl,
the proportions of the components (of the separator) adding up to 100 wt.-%

The lithium-ion battery according to the present invention can be used in applications including automobiles, consumer products, electronic devices, energy storage, e-bikes and cargo transport.

The present invention will be explained in more detail with reference to the following example without restricting the invention to the specifically shown parameters.

### Example

### Preparation of cathode

A mixture of NMC622 (LiNi_{0.6}Mn_{0.2}Co_{0.2}O₂), PVDF-based copolymer and conductive carbon black (C-NERGY^{™} Super C65, Imerys) with a ratio of (90:5:5) wt.-% was used. The binder was dissolved in N-methyl-2-pyrrolidone (NMP, 99.5%, 100 wt.-% of the total powder mass) for 15 h on a vibrating plate. SuperC65 was added to the NMC622 and mixed for 10 min. The premixed powder was added to the binder solution and blended. The slurry was applied onto an aluminum foil. The layer was allowed to evaporate for 15 h in a fume hood and dried the next day for 2 h at 80 °C and reduced pressure in a vacuum oven. For cell construction, the cathodes were heated at 110 °C for 12 h and transferred into a glove box.

### Preparation of anode

A mixture of nano silicon, sodium carboxymethylcellulose and carbon black (C-NERGY^{™} Super C65, Imerys) with a ratio of (75:15:10) wt.-% was used. The binder was dissolved in a citric acid buffer solution (pH 3). Then the carbon black and Si were added. The mixture was homogenized and then applied directly on dendritic copper foil by the doctor blade method. The resulting layers were dried in the air at room temperature for 30 minutes before being dried in a drying oven for another 30 minutes at 80 °C. From the resulting electrode layer 16 mm round electrodes were punched out. The finished electrodes were dried for 12 hours at 110 °C and 1^{∗}10⁻³ bar before further processing.

### Preparation of anolyte (Hybrid Organic-inorganic Polymer Electrolyte)

The pre-polymer (uncured inorganic-organic hybrid polymer) was used to prepare the hybrid polymer electrolyte. For this, the conducting salt lithium bis(fluorosulfonyl)imide (20.77 wt%; LiFSI, 99.9%, Arkema) and the ionic liquid N-butyl-N-methylpyrrolidinium bis(fluorosulfonyl)imide (15.00 wt.-%; BMPyrFSI [=Pyr14FSI], 99.9 %, Solvionic) were dissolved in 1.00 g of the pre-polymer (64.08 wt.-%) using a magnetic stirrer at ^{~}300 rpm for 15 h. Then 0.0023 g of the initiator ethylamine trifluoroborane (0.226 mmol, 0.15 wt.-%; BF₃·NH₂Et, 1:1, Sigma Aldrich) was added to the viscous polymer and this was dissolved using a magnetic stirrer for 30 min at 300 rpm.

### Preparation of catholyte (PVDF-copolymer electrolyte)

1.00 g of VDF-PPE polymer powder (50 wt.-%; Daikin Industries) was dissolved in 9.00 g of acetone using a magnetic stirrer for 15 h at ^{~}300 rpm. Thereafter, 0.400 g of lithium bis(fluorosulfonyl)imide (20 wt.-%; LiFSI, 99.9 %, Arkema) and 0.600 g of N-butyl-N-methylpyrrolidinium bis(fluorosulfonyl)imide (30 wt.-%; BMPyrFSI [=Pyr14FSI], 99.9%, Solvionic) were dissolved stirring for 12 h at 300 rpm.

### Cell preparation

The PVDF-copolymer electrolyte was directly coated onto a cathode sheet using a doctor blade and a drawing speed of 2.5 mm/s. The membranes were dried for 15 h at ambient pressure and then for 10 min at reduced pressure. The hybrid polymer electrolyte precursor was coated both on the silicon anodes (to infiltrate into the anode porosity) and onto the PVDF-copolymer electrolyte coated cathodes. The infiltrated anode was placed directly onto the cathode. The HPE in the cell stack was cured at 80 °C for 15 h using a hot plate. The sandwich was punched out of the cathode sheet, placed into pouch cells and sealed.

## Claims

1. Lithium-ion battery comprising a cathode, an anode, and also an anolyte and a catholyte, **characterized in that** the anolyte is a polymer electrolyte comprising at least one inorganic-organic hybrid polymer, and the catholyte is a polymer electrolyte comprising at least one fluoropolymer.

2. Lithium-ion battery according to claim 1, **characterized in that** the at least one inorganic-organic hybrid polymer is producible from at least one crosslinkable precursor comprising or consisting of one or more structural units according to the following formula (I), 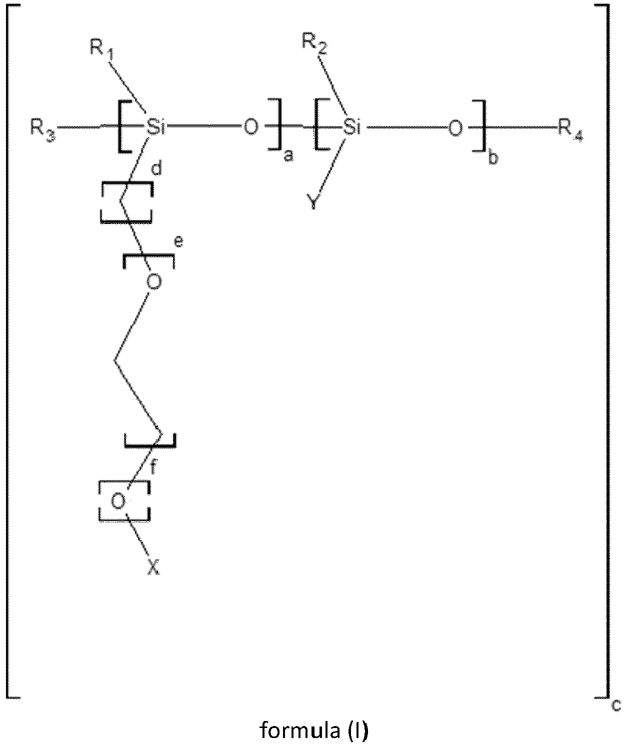 wherein
X is selected from the group consisting of vinyl, acryl, methacryl, epoxy, glycidyl, and spiro orthoester,
R₁, R₂, R₃ are each independently selected from the group consisting of -H, -OH, alkyl, -O-alkyl, and -O-, wherein -O- is a bridging grouping to a Si atom of the same structural unit or another structural unit according to formula (I) of the at least one crosslinkable precursor,
R₄ is selected from the group consisting of -H, alkyl, and Si of another structural unit according to formula (I) of the at least one crosslinkable precursor,
Y is selected from the group consisting of -Z, -alkyl-Z, -aryl-Z, and -(CH₂)ₕ-O-(CH₂CH₂O)ᵢ-Z, wherein h = 2 or 3, and i = 1 to 20,
Z is an uncharged group or an anionic group,
a is a number from 1 to 30,
b is a number from 1 to 30,
c is a number from 1 to 30,
d is a number from 2 to 6,
e is a number from 0 to 20, and
f is 0 or 1.

3. Lithium-ion battery according to claim 1 or 2, **characterized in that** the at least one fluoropolymer is selected from the group consisting of polyvinyl fluoride (PVF), polyvinylidene fluoride (PVDF), polytetrafluoroethylene (PTFE), polyhexafluoropropane (PHFP), polyethylene tetrafluoroethylene (ETFE), polychlorotrifluoroethylene (CTFE), polyethylenechlorotrifluoroethylene (ECTFE), and also blends and copolymers thereof.

4. Lithium-ion battery according to any one of claims 1 to 3, **characterized in that** the catholyte and/or the anolyte comprises at least one lithium salt and at least one ionic liquid.

5. Lithium-ion battery according to claim 4, **characterized in that** the at least one lithium salt is selected from the group consisting of LiPF₆, LiBF₄. LiClO₄, LiAsF₆, LiB(C₂O₄)₂, LiBF₂(C₂O₄), LiSO₃CₓF₂ₓ₊₁, LiN(SO₂CₓF₂ₓ₊₁)₂, and LiC(SO₂CₓF₂ₓ₊₁)₃, and mixtures thereof, wherein x is an integer from 0 to 8.

6. Lithium-ion battery according to claim 4 or 5, **characterized in that** the at least one ionic liquid is selected from the group consisting of pyrrolidinium-N(SO₂CₓF₂ₓ₊₁)₂, N-alkyl-N-alkyl-pyrrolidinium-N(SO₂CₓF₂ₓ₊₁)₂, N-alkyl-N-alkoxyalkyl-pyrrolidinium-N(SO₂CₓF₂ₓ₊₁)₂, pyridinium-N(SO₂CₓF₂ₓ₊₁)₂, imidazolium-N(SO₂CₓF₂ₓ₊₁)₂, 1-alkyl-3-alkyl-imidazolium-N(SO₂CₓF₂ₓ₊₁)₂, 1-alkoxyalkyl-3-alkyl-imidazolium-N(SO₂CₓF₂ₓ₊₁)₂, piperidinium-N(SO₂CₓF₂ₓ₊₁)₂, N-alkyl-N-alkyl-piperidinium-N(SO₂CₓF₂ₓ₊₁)₂, N-alkyl-N-alkoxyalkyl-piperidinium-N(SO₂CₓF₂ₓ₊₁)₂, pyrrolidinium trifluoromethanesulfonate, N-alkyl-N-alkyl-pyrrolidinium trifluoromethanesulfonate, N-alkyl-N-alkoxyalkyl-pyrrolidinium trifluoromethanesulfonate, imidazolium trifluoromethanesulfonate, 1-alkyl-3-alkyl-imidazolium trifluoromethanesulfonate, 1-alkoxyalkyl-3-alkyl-imidazolium trifluoromethanesulfonate, imidazolium tetrafluoroborate, 1-alkyl-3-alkyl-imidazolium-tetrafluoroborate, 1-alkoxyalkyl-3-alkyl-imidazolium-tetrafluoroborate, piperidinium tetrafluoroborate, N-alkyl-N-alkyl-piperidinium tetrafluoroborate, N-alkyl-N-alkoxyalkyl-piperidinium tetrafluoroborate, pyrrolidinium tetrafluoroborate, N-alkyl-N-alkyl-pyrrolidinium tetrafluoroborate, N-alkyl-N-alkoxyalkyl-pyrrolidinium tetrafluoroborate, pyridinium tetrafluoroborate, and mixtures thereof, wherein x is an integer from 0 to 8.

7. Lithium-ion battery according to any one of claims 1 to 6, **characterized in that** the anolyte has the following composition:
- 20 to 95 wt.-%, preferably 40 to 80 wt.-%, of the at least one inorganic-organic hybrid polymer, wherein the at least one inorganic-organic hybrid polymer is preferably producible from at least one crosslinkable precursor comprising or consisting of one or more structural units according to formula (I) given in claim 2,
- 4 to 79 wt.-%, preferably 8 to 40 wt.-%, of at least one lithium salt, wherein the at least one lithium salt is preferably selected from the group consisting of LiPF₆, LiBF₄. LiClO₄, LiAsF₆, LiB(C₂O₄)₂, LiBF₂(C₂O₄), LiSO₃CₓF₂ₓ₊₁, LiN(SO₂CₓF₂ₓ₊₁)₂, and LiC(SO₂CₓF₂ₓ₊₁)₃, and mixtures thereof, wherein x is an integer from 0 to 8,
- 1 to 50 wt.-%, preferably 10 to 30 wt.-%, of at least one ionic liquid, wherein the at least one ionic liquid is preferably selected from the group consisting of pyrrolidinium-N(SO₂CₓF₂ₓ₊₁)₂, N-alkyl-N-alkyl-pyrrolidinium-N(SO₂CₓF₂ₓ₊₁)₂, N-alkyl-N-alkoxyalkyl-pyrrolidinium-N(SO₂CₓF₂ₓ₊₁)₂, pyridinium-N(SO₂CₓF₂ₓ₊₁)₂, imidazolium-N(SO₂CₓF₂ₓ₊₁)₂, 1-alkyl-3-alkyl-imidazolium-N(SO₂CₓF₂ₓ₊₁)₂, 1-alkoxyalkyl-3-alkyl-imidazolium--N(SO₂CₓF₂ₓ₊₁)₂, piperidinium-N(SO₂CₓF₂ₓ₊₁)₂, N-alkyl-N-alkyl-piperidinium-N(SO₂CₓF₂ₓ₊₁)₂, N-alkyl-N-alkoxyalkyl-piperidinium-N(SO₂CₓF₂ₓ₊₁)₂, pyrrolidinium trifluoromethanesulfonate, N-alkyl-N-alkyl-pyrrolidinium trifluoromethanesulfonate, N-alkyl-N-alkoxyalkyl-pyrrolidinium trifluoromethanesulfonate, imidazolium trifluoromethanesulfonate, 1-alkyl-3-alkyl-imidazolium trifluoromethanesulfonate, 1-alkoxyalkyl-3-alkyl-imidazolium trifluoromethanesulfonate, imidazolium tetrafluoroborate, 1-alkyl-3-alkyl-imidazolium tetrafluoroborate, 1-alkoxyalkyl-3-alkyl-imidazolium tetrafluoroborate, piperidinium tetrafluoroborate, N-alkyl-N-alkyl-piperidinium tetrafluoroborate, N-alkyl-N-alkoxyalkyl-piperidinium tetrafluoroborate, pyrrolidinium tetrafluoroborate, N-alkyl-N-alkyl-pyrrolidinium tetrafluoroborate, N-alkyl-N-alkoxyalkyl-pyrrolidinium tetrafluoroborate, pyridinium tetrafluoroborate, and mixtures thereof, wherein x is an integer from 0 to 8,
- optionally 0.1 to 30 wt.-%, preferably 1 to 10 wt.-%, of at least one crosslinking molecule having at least one crosslinkable group selected from group consisting of vinyl, acryl, methacryl, epoxy, glycidyl, and spiro orthoester,
- optionally 0.01 to 5.00 wt.-%, preferably 0.05 to 0.50 wt.-%, of at least one initiator, wherein the at least one initiator is preferably selected from the group consisting of LiBF₄. dibenzoylperoxide (DBPO), borontrifluoride ethylamine complex, 2,2'-azobis(isobutyronitrile) (AIBN), and mixtures thereof,
the proportions of the components adding up to 100 wt.-%.

8. Lithium-ion battery according to any one of claims 1 to 7, **characterized in that** the catholyte has the following composition:
- 30 to 80 wt.-%, preferably 40 to 70 wt.-%, of the at least one fluoropolymer, wherein the at least one fluoropolymer is preferably selected from the group consisting of polyvinyl fluoride (PVF), polyvinylidene fluoride (PVDF), polytetrafluoroethylene (PTFE), polyhexafluoropropane (PHFP), polyethylene tetrafluoroethylene (ETFE), polychlorotrifluoroethylene (CTFE), polyethylenechlorotrifluoroethylene (ECTFE), and also blends and copolymers thereof,
- 10 to 33 wt.-%, preferably 15 to 30 wt.-%, of at least one lithium salt, wherein the at least one lithium salt is preferably selected from the group consisting of LiPF₆, LiBF₄. LiClO₄, LiAsF₆, LiB(C₂O₄)₂, LiBF₂(C₂O₄), LiS0₃CₓF₂ₓ₊₁, LiN(SO₂CₓF₂ₓ₊₁)₂, and LiC(SO₂CₓF₂ₓ₊₁)₃, and mixtures thereof, wherein x is an integer from 0 to 8,
- 10 to 60 wt.-%, preferably 20 to 40 wt.-%, of at least one ionic liquid, wherein the at least one ionic liquid is preferably selected from the group consisting of pyrrolidinium-N(SO₂CₓF₂ₓ₊₁)₂, N-alkyl-N-alkyl-pyrrolidinium-N(SO₂CₓF₂ₓ₊₁)₂, N-alkyl-N-alkoxyalkyl-pyrrolidinium-N(SO₂CₓF₂ₓ₊₁)₂, pyridinium-N(SO₂CₓF₂ₓ₊₁)₂, imidazolium-N(SO₂CₓF₂ₓ₊₁)₂, 1-alkyl-3-alkyl-imidazolium-N(SO₂CₓF₂ₓ₊₁)₂, 1-alkoxyalkyl-3-alkyl-imidazolium-N(SO₂CₓF₂ₓ₊₁)₂, piperidinium-N(SO₂CₓF₂ₓ₊₁)₂, N-alkyl-N-alkyl-piperidinium-N(SO₂CₓF₂ₓ₊₁)₂, N-alkyl-N-alkoxyalkyl-piperidinium-N(SO₂CₓF₂ₓ₊₁)₂, pyrrolidinium trifluoromethanesulfonate, N-alkyl-N-alkyl-pyrrolidinium trifluoromethanesulfonate, N-alkyl-N-alkoxyalkyl-pyrrolidinium trifluoromethanesulfonate, imidazolium trifluoro-methanesulfonate, 1-alkyl-3-alkyl-imidazolium trifluoro-methanesulfonate, 1-alkoxyalkyl-3-alkyl-imidazolium trifluoro-methanesulfonate, imidazolium tetrafluoroborate, 1-alkyl-3-alkyl-imidazolium tetrafluoroborate, 1-alkoxyalkyl-3-alkyl-imidazolium tetrafluoroborate, piperidinium tetrafluoroborate, N-alkyl-N-alkyl-piperidinium tetrafluoroborate, N-alkyl-N-alkoxyalkyl-piperidinium tetrafluoroborate, pyrrolidinium tetrafluoroborate, N-alkyl-N-alkyl-pyrrolidinium tetrafluoroborate, N-alkyl-N-alkoxyalkyl-pyrrolidinium tetrafluoroborate, pyridinium tetrafluoroborate, and mixtures thereof, wherein x is an integer from 0 to 8,
the proportions of the components adding up to 100 wt.-%.

9. Lithium-ion battery according to any one of claims 1 to 8, **characterized in that** the cathode has a first coating comprising the catholyte and has a second coating comprising the anolyte.

10. Lithium-ion battery according to any one of claims 1 to 9, **characterized in that** the anode has a coating comprising the anolyte.

11. Lithium-ion battery according to any one of claims 1 to 10, **characterized in that** the anode comprises or consists of a material selected from the group consisting of lithium, silicon, germanium, tin, aluminium, antimony, lithium metal oxides, and also mixtures, alloys, and combinations thereof, wherein preferably the anode comprises silicon, wherein more preferably the anode comprises from 50 to 95 wt.-%, preferably from 70 to 85 wt.-%, of silicon.

12. Lithium-ion battery according to any one of claims 1 to 11, **characterized in that** the cathode comprises or consists of a material selected from the group consisting of lithium metal oxides, lithium metal phosphates, and also mixtures and combinations thereof, wherein preferably the cathode comprises from 50 to 95 wt.-%, preferably from 70 to 85 wt.-%, of a material selected from the group consisting of lithium metal oxides, lithium metal phosphates, and also mixtures and combinations thereof.

13. Lithium-ion battery according to any one of claims 1 to 12, **characterized in that** the lithium-ion battery comprises a separator, wherein the separator has preferably the following composition:
- 30 to 80 wt.-%, preferably 40 to 70 wt.-%, of the at least one fluoropolymer, wherein the at least one fluoropolymer is preferably selected from the group consisting of polyvinyl fluoride (PVF), polyvinylidene fluoride (PVDF), polytetrafluoroethylene (PTFE), polyhexafluoropropane (PHFP), polyethylene tetrafluoroethylene (ETFE), polychlorotrifluoroethylene (CTFE), polyethylenechlorotrifluoroethylene (ECTFE), and also blends and copolymers thereof,
- 10 to 33 wt.-%, preferably 15 to 30 wt.-%, of at least one lithium salt, wherein the at least one lithium salt is preferably selected from the group consisting of LiPF₆, LiBF₄. LiClO₄, LiAsF₆, LiB(C₂O₄)₂, LiBF₂(C₂O₄), LiS0₃CₓF₂ₓ₊₁, LiN(SO₂CₓF₂ₓ₊₁)₂, and LiC(SO₂CₓF₂ₓ₊₁)₃, and mixtures thereof, wherein x is an integer from 0 to 8,
- 10 to 60 wt.-%, preferably 20 to 40 wt.-%, of at least one ionic liquid, wherein the at least one ionic liquid is preferably selected from the group consisting of pyrrolidinium-N(SO₂CₓF₂ₓ₊₁)₂, N-alkyl-N-alkyl-pyrrolidinium-N(SO₂CₓF₂ₓ₊₁)₂, N-alkyl-N-alkoxyalkyl-pyrrolidinium-N(SO₂CₓF₂ₓ₊₁)₂, pyridinium-N(SO₂CₓF₂ₓ₊₁)₂, imidazolium-N(SO₂CₓF₂ₓ₊₁)₂, 1-alkyl-3-alkyl-imidazolium-N(SO₂CₓF₂ₓ₊₁)₂, 1-alkoxyalkyl-3-alkyl-imidazolium-N(SO₂CₓF₂ₓ₊₁)₂, piperidinium-N(SO₂CₓF₂ₓ₊₁)₂, N-alkyl-N-alkyl-piperidinium-N(SO₂CₓF₂ₓ₊₁)₂, N-alkyl-N-alkoxyalkyl-piperidinium-N(SO₂CₓF₂ₓ₊₁)₂, pyrrolidinium trifluoromethanesulfonate, N-alkyl-N-alkyl-pyrrolidinium trifluoromethanesulfonate, N-alkyl-N-alkoxyalkyl-pyrrolidinium trifluoromethanesulfonate, imidazolium trifluoro-methanesulfonate, 1-alkyl-3-alkyl-imidazolium trifluoro-methanesulfonate, 1-alkyl-3-alkylimidazolium trifluoro-methanesulfonate, imidazolium tetrafluoroborate, 1-alkyl-3-alkyl-imidazolium tetrafluoroborate, 1-alkoxyalkyl-3-alkyl-imidazolium tetrafluoroborate, piperidinium tetrafluoroborate, N-alkyl-N-alkyl-piperidinium tetrafluoroborate, N-alkyl-N-alkoxyalkyl-piperidinium tetrafluoroborate, pyrrolidinium tetrafluoroborate, N-alkyl-N-alkyl-pyrrolidinium tetrafluoroborate, N-alkyl-N-alkoxyalkyl-pyrrolidinium tetrafluoroborate, pyridinium tetrafluoroborate, and mixtures thereof, wherein x is an integer from 0 to 8,
the proportions of the components adding up to 100 wt.-%.
